**Europäisches Patentamt**

**European Patent Office**

**Office européen des brevets**

(19)

(11) Veröffentlichungsnummer: **0 474 636 B1**

(12) # EUROPÄISCHE PATENTSCHRIFT

(45) Veröffentlichungstag der Patentschrift: **27.07.94**

(51) Int. Cl.5: **H04N 7/133**

(21) Anmeldenummer: **90904756.5**

(22) Anmeldetag: **21.03.90**

(86) Internationale Anmeldenummer:
**PCT/DE90/00225**

(87) Internationale Veröffentlichungsnummer:
**WO 90/15506 (13.12.90 90/28)**

(54) **VERFAHREN ZU EINER ERMITTLUNG EINES ENTSCHEIDUNGSERGEBNISSES FÜR EIN HALBBILD/VOLLBILD-DATENKOMPRESSIONSVERFAHREN.**

(30) Priorität: **30.05.89 DE 3917567**

(43) Veröffentlichungstag der Anmeldung:
**18.03.92 Patentblatt 92/12**

(45) Bekanntmachung des Hinweises auf die
Patenterteilung:
**27.07.94 Patentblatt 94/30**

(84) Benannte Vertragsstaaten:
**DE FR GB IT NL**

(56) Entgegenhaltungen:
**EP-A- 0 282 135**

(73) Patentinhaber: **SIEMENS AKTIENGESELL-
SCHAFT
Wittelsbacherplatz 2
D-80333 München(DE)**

(72) Erfinder: **KUTKA, Robert, Dr.
Hainbuchenstrasse 3
W-8085 Geltendorf(DE)**

**EP 0 474 636 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zu einer Ermittlung eines Entscheidungsergebnisses für ein Halbbild/Vollbild-Datenkompressionsverfahren, bei welchem von einem Bildausschnitt eines fallweise bewegten Bildes in einem Zeilensprungverfahren zeitlich aufeinanderfolgend Bildwerte von Bildpunkten in Bildzeilen von zwei zu einem Vollbild zusammensetzbaren Halbbildern aufgezeichnet werden, und bei welchem das Halbbild/Vollbild-Datenkompressionsverfahren beim positiven Entscheidungsergebnis auf das Vollbild und anderenfalls getrennt auf beide Halbbilder angewendet wird.

Ein Verfahren der genannten Art ist anwendbar insbesondere für die Übertragung hochauflösender digitaler Fernsehsignale, deren Übertragung beispielsweise mit einer Bandbreite von 120 Megabit/Sekunde erfolgt bei Verwendung einer Datenkompression um den Faktor 8 zur Verringerung der erforderlichen Datenrate. Dabei werden Daten bestehend aus Luminanzwerten und Chrominanzwerten von Bildpunkten durch eine Nutzung der Korrelation benachbarter Punkte komprimiert übertragen. Für die Durchführung des Datenkompressionsverfahrens ist beispielsweise eine Diskret-Cosinus-Transformation anwendbar.

Die Autoren H. Hölzlwimmer, W. Tengler, A.v. Brandt beschreiben in der Zeitschrift SPIE, Vol. 594, Image Coding, 1985, unter dem Titel "A new hybrid coding technique for video conference applications at 2 Mbit/s" ein Datenkompressionsverfahren, bei welchem im Zeilensprungverfahren aufgezeichnete Fernsehbilder mittels einer Diskret-Cosinus-Transformation codiert werden. Dabei werden Bildblöcke von 16x16 Bildpunkten transformiert.

Gemäß dem Zeilensprungverfahren werden zwei Halbbilder aufgezeichnet, welche zu einem Vollbild zusammenzusetzen sind. Bei einem nicht bewegten oder nur geringfügig bewegten Bildausschnitt wird das Vollbild transformiert zur Durchführung der Datenkompression. Insbesondere bei einer dominanten horizontalen Bewegung im Bildausschnitt in Richtung der Bildzeilen werden beide Halbbilder getrennt transformiert. Dabei ist ein Verfahren erforderlich zu einer Ermittlung eines Entscheidungsergebnisses für das Halbbild/Vollbild-Datenkompressionsverfahren.

Die Autoren M. Barbero, M. Stroppiana, S. Cucci beschreiben unter dem Titel "Coding strategies based on DCT for the transmission of HDTV" in den Proceedings of the 2nd International Workshop on HDTV, L'Aquila, 1988, ein Verfahren zu einer Ermittlung eines Entscheidungsergebnisses für das Halbbild/Vollbild-Datenkompressionsverfahren, bei welchem die Datenrate gemäß dem mittleren quadratischen Fehler des Signal-Rausch-Verhältnisses optimiert wird.

Die Autoren D. Westerkamp und H. Peters beschreiben unter dem Titel "Comparison between progressive and interlaced scanning for a future HDTV System with digital data rate reduction" in den Proceedings of the 2nd International Workshop on signal processing of HDTV, volume 1, an der Scuola Superiore G. Reis Romoli, 29. Februar bis 2. März 1988, ein Verfahren zu einer Ermittlung eines Entscheidungsergebnisses für ein Halbbild/Vollbild-Datenkompressionsverfahren, welches die Anzahl der Koeffizienten ungleich Null im transformierten Block zur Bewertung verwendet.

Der Autor E. Peters beschreibt unter dem Titel "A 15 Mbit/s codec for component video signals" beim Picture Coding Symposium PCS'88, Turin, Italien, 12.-14. September 1988, ein Verfahren zu einer Ermittlung eines Entscheidungsergebnisses für ein Halbbild/Vollbild-Datenkompressionsverfahren, welches besondere Koeffizienten der Bewegung für geschätzte Bewegungsvektoren verwendet.

Die Offenlegungsschrift EP-A-0 282 135 offenbart ein bitraratenreduziertes Fernsehsignal-Übertragungsverfahren, bei welchem ein Transformations-Kodierungsverfahren verwendet wird. Dabei wird im Falle eines statischen Bildes die "intraframe"-Transformation (von beiden Halbbildern eines Vollbildes) verwendet, bei geringen Bewegungen vor der letzteren Transformation ein Medianfilter verwendet, welches den mittleren Amplitudenwert berechnet), und damit den Originalwert liefert. Bei Bewegungen wird die "intrafield"-Transformation (innerhalb eines Halbbildes) im Zeilensprungverfahren verwendet.

Die Aufgabe der Erfindung besteht darin, ein weiteres Verfahren zu einer Ermittlung eines Entscheidungsergebnisses für ein Halbbild/Vollbild-Datenkompressionsverfahren anzugeben. Diese Aufgabe wird gelöst durch ein Verfahren, bei welchem von einem Bildausschnitt eines fallweise bewegten Bildes in einem Zeilensprungsprungverfahren zeitlich aufeinanderfolgend Bildwerte von Bildpunkten in Bildzeilen von zwei zu einem Vollbild zusammensetzbaren Halbbildern aufgezeichnet werden, und bei welchem das Halbbild/Vollbild-Datenkompressionsverfahren beim positiven Entscheidungsergebnis auf das Vollbild und anderenfalls getrennt auf beide Halbbilder angewendet wird, indem die Ermittlung des Entscheidungsergebnisses auf folgende Weise durchgeführt wird:

a) von jeweils einem Halbbild-Bildpunktpaar gebildet von zwei der Bildpunkte an einer gleichen Bildpunktposition in jeweils zwei der unmittelbar aufeinanderfolgenden Bildzeilen desselben Halbbildes wird jeweils eine Halbbilddifferenz aus einer Differenz der Bildwerte der Bildpunkte des Halbbild-Bildpunktpaares ermittelt und von allen den Halbbild-Bildpunktpaaren beider Halbbilder werden die Halbbilddifferenzen absolut aufsummiert zu einer Halbbildsumme,

b) von jeweils einem Vollbild-Bildpunktpaar, gebildet von zwei der Bildpunkte an der gleichen Bildpunktposition in jeweils zwei der im aus den Halbbildern zusammengesetzten Vollbild unmittelbar nebeneinanderliegenden Bildzeilen aus je einem der Halbbilder, wird jeweils eine Vollbilddifferenz aus der Differenz der Bildwerte der Bildpunkte des Vollbild-Bildpunktpaares ermittelt, und von allen den Vollbild-Bildpunktpaaren werden die Vollbilddifferenzen absolut aufsummiert zu einer Vollbildsumme,

c) die Vollbildsumme wird mit einem Vollbild-Bewertungsfaktor multipliziert zu einem Vollbild-Produkt, und das Vollbildprodukt wird von der Halbbildsumme subtrahiert zu dem positiven Entscheidungsergebnis.

Dieses vorteilhaft einfache Entscheidungsverfahren erkennt in besonders einfacher Weise eine Bewegung in Richtung der Bildzeilen mittels der Halbbildsumme und Vollbildsumme. Anhand des Unterschiedes von Halbbildsumme und Vollbildsumme wird mittels des Vollbild-Bewertungsfaktors in vorteilhaft einfacher Weise eine Bewegung bewertet und bei der Ermittlung des Entscheidungsergebnisses berücksichtigt. Beispielsweise gemäß einer mathematischen Umformung der beschriebenen Relation ist die Entscheidung ebenso ermittelbar, beispielsweise durch einen bestimmten Entscheidungsgrenzwert für einen Quotienten aus Halbbildsumme dividiert durch Vollbildsumme, oder beispielsweise durch einen bestimmten Entscheidungsgrenzwert für einen Quotienten aus der Differenz von Halbbildsumme minus Vollbildsumme dividiert durch die Summe von Halbbildsumme plus Vollbildsumme.

Das Entscheidungsverfahren ist insbesondere für Bildausschnitte anwendbar, welche im Zeilensprungverfahren aufgezeichnet werden. Das Entscheidungsverfahren ist dabei unabhängig vom jeweiligen Datenkompressionsverfahren. Der Vollbild-Bewertungsfaktor ist dabei an das Datenkompressionsverfahren anpaßbar, und ist in den meisten Anwendungsfällen ungefähr 0,9. Beispielsweise durch eine subjektive Beurteilung von Testszenen ist ein optimaler Wert für den Vollbild-Bewertungsfaktor auffindbar.

In vorteilhafter Weise ist das Entscheidungsverfahren nicht an ein bestimmtes Datenkompressionsverfahren gebunden. Das Datenkompressionsverfahren ist beispielsweise eine Diskret-Cosinus-Transformation, oder eine Vektorquantisierung, oder ein Verfahren bei welchem sogenannte Musterbilder verwendet werden, aus welchen in einer gewichteten Überlagerung der Bildausschnitt angenähert dargestellt wird, oder ein hierarchisches Verfahren, beispielsweise eines Quad-Tree, bei welchem mit unterschiedlicher Blockgröße Blöcke hierarchisch in innere Blöcke unterteilt werden.

Eine bevorzugte Ausführungsform der Erfindung ist dadurch gekennzeichnet, daß das Datenkompressionsverfahren eine Diskret-Cosinus-Transformation ist, welches für sehr viele und häufig vorkommende Bildinhalte vorteilhaft anwendbar ist.

Eine weitere bevorzugte Ausführungsform der Erfindung ist dadurch gekennzeichnet, daß der Vollbild-Bewertungsfaktor einen Zahlenwert zwischen 0,8 bis 1,0 aufweist. Für eine große Anzahl von Testszenen bei einem bildpunktweisen Vergleich der Bildwerte eines komprimiert aufgezeichneten Abbildes mit dem nicht komprimiert aufgezeichneten Abbild ist der mittlere quadratische Fehler ausreichend günstig, welcher das sog. Signal-Rausch-Verhältnis entscheidend bestimmt.

Eine weitere bevorzugte Ausführungsform der Erfindung ist dadurch gekennzeichnet, daß der Vollbild-Bewertungsfaktor den Zahlenwert 0,9 aufweist. Bei einer subjektiven Beurteilung von Testszenen, beispielsweise "Kieler Hafen" oder "Doll", wird dieser Vollbild-Bewertungsfaktor als optimal empfunden. Die genannten Testszenen wurden vom Institut für Rundfunktechnik aufgezeichnet, und sie werden häufig für eine subjektive Beurteilung als günstig erachtet.

Eine weitere bevorzugte Ausführungsform der Erfindung ist dadurch gekennzeichnet, daß der Bildausschnitt ein 16x16 Bildpunktblock eines Fernsehbildes ist, welcher entweder als ein 16x16 Vollbildblock transformiert wird oder getrennt in jeweils zwei 16x8 Halbbildblöcken transformiert wird. Insbesondere für eine Diskret-Cosinus-Transformation ist diese Blockeinteilung vorteilhaft.

Eine weitere bevorzugte Ausführungsform der Erfindung ist dadurch gekennzeichnet, daß der Bildausschnitt aufgezeichnet ist mittels eines hochauflösenden Fernsehverfahrens, eines "High Definition Television". Die bekannten Vorteile dieses Fernsehverfahrens insbesondere betreffend eine hohe Bildqualität sind dadurch nutzbar.

Eine weitere bevorzugte Ausführungsform der Erfindung ist dadurch gekennzeichnet, daß der Bildausschnitt ein 8x8 Bildpunktblock eines Fernsehbildes ist, welcher entweder als ein 8x8 Vollbildblock transformiert wird oder getrennt in jeweils zwei 8x4 Halbbildblöcken transformiert wird. Insbesondere für eine Diskret-Cosinus-Transformation ist diese Blockeinteilung für besonders detailreiche Bildszenen vorteilhaft.

Die besonderen Vorteile des erfindungsgemäßen Entscheidungsverfahrens liegen vor allem darin, daß dieses kontrastunabhängig ist. Beispielsweise mit einer Vergrößerung des Kontrastes vergrößert sich die Vollbildsumme und ebenso die Halbbildsumme, sodaß das Entscheidungsergebnis gleich bleibt.

Die Erfindung wird anhand einer Figur näher erläutert, in welcher ein Ausführungsbeispiel dargestellt ist.

Die Figur 1     zeigt die Anordnung für das Ausführungsbeispiel.

Die Figur 2     zeigt den Bildausschnitt des Ausführungsbeispieles.

Die Figur 3     zeigt die eingetragenen Bildwerte des ersten Halbbildes.

Die Figur 4     zeigt die eingetragenen Bildwerte des zweiten Halbbildes.

Die Figur 5     zeigt die eingetragenen Bildwerte des Vollbildes.

Die Figur 6     zeigt die eingetragenen Zahlenwerte der Bildwerte des Vollbildes.

Die Figur 7     zeigt ein Ablaufdiagramm für das Komprimieren des Bildausschnittes.

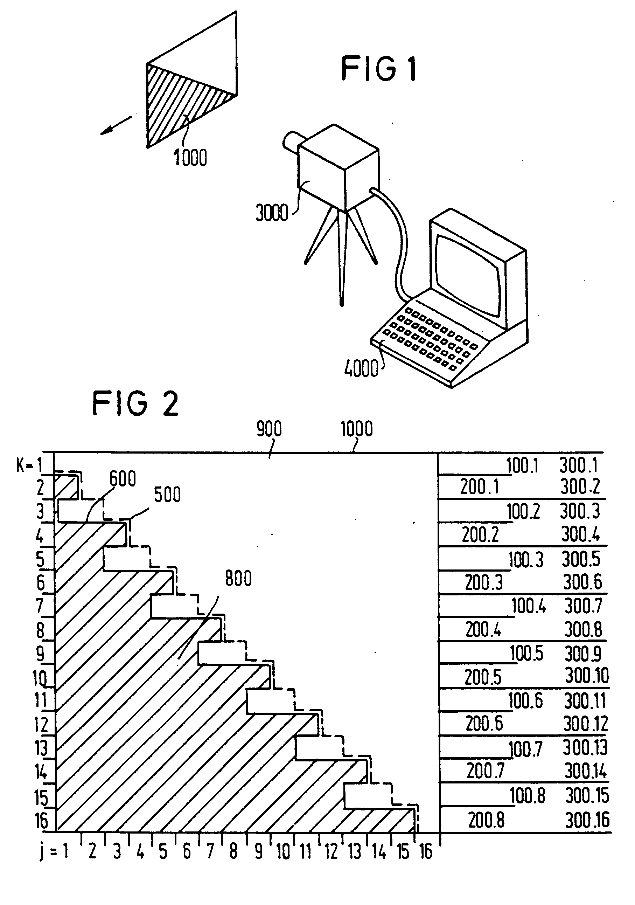

Wie die Figur 1 zeigt, wird bei diesem Ausführungsbeispiel mit einer Kamera 3000 ein Bildausschnitt 1000 aufgezeichnet, welcher sich horizontal nach links bewegt. Die dabei in einem Zeilensprungverfahren aufgezeichneten Bildwerte werden in einer Rechenanlage 4000 nach Durchführung einer Diskret-Cosinus-Transformation komprimiert gespeichert.

Wie die Figur 2 zeigt, besteht der Bildausschnitt 1000 aus 16x16 Bildpunkten. Der Bildausschnitt 1000 wird in einem Zeilensprungverfahren in zwei Halbbildern aufgezeichnet. Das erste aufgezeichnete Halbbild besteht aus den Bildzeilen 101, 102 bis 108. Das darauffolgend zweite aufgezeichnete Halbbild besteht aus den Bildzeilen 201, 202 bis 208. Aus beiden Halbbildern wird das Vollbild, bestehend aus den Bildzeilen 301, 302 bis 316 zusammengesetzt. Der abgebildete Gegenstand ist dabei eine diagonale Grenzlinie zwischen einem hellen Bereich 900 und einem dunklen Bereich 800 des Bildausschnittes 1000.

Diese Grenzlinie bewegt sich horizontal nach links. Bedingt durch die Bewegung wird im aufgezeichneten Bildausschnitt 1000 die Grenzlinie 600 erhalten.

Ohne diese Bewegung würde die Grenzlinie 500 im aufgezeichneten Bildausschnitt 1000 erhalten werden, welche zum besseren Verständnis strichliert eingezeichnet ist.

Ein Bildwert eines Bildpunktes im hellen Bereich 900 wird bei diesem Ausführungsbeispiel mit einem Wert gleich 1 aufgezeichnet. Ein Bildwert eines Bildpunktes im dunklen Bereich 800 wird bei diesem Ausführungsbeispiel mit einem Wert gleich 0 aufgezeichnet. Mittels Indizierung werden die an den Bildpunkten aufgezeichneten Bildwerte $B_{j,k}$ unterschieden. Der erste Index j bezeichnet jeweils die Bildpunktposition in den Bildzeilen 301-316. Der zweite Index k bezeichnet die Position der Bildzeile in dem aus den Halbbildern zusammensetzbaren Vollbild. So ist beispielsweise bei diesem Ausführungsbeispiel an der 15. Bildpunktposition in der 16. Bildzeile der aufgezeichnete Bildwert $B_{15,61} = 0$, und an der 16. Bildpunktposition in der 16. Bildzeile ist der aufgezeichnete Bildwert $B_{16,16} = 1$.

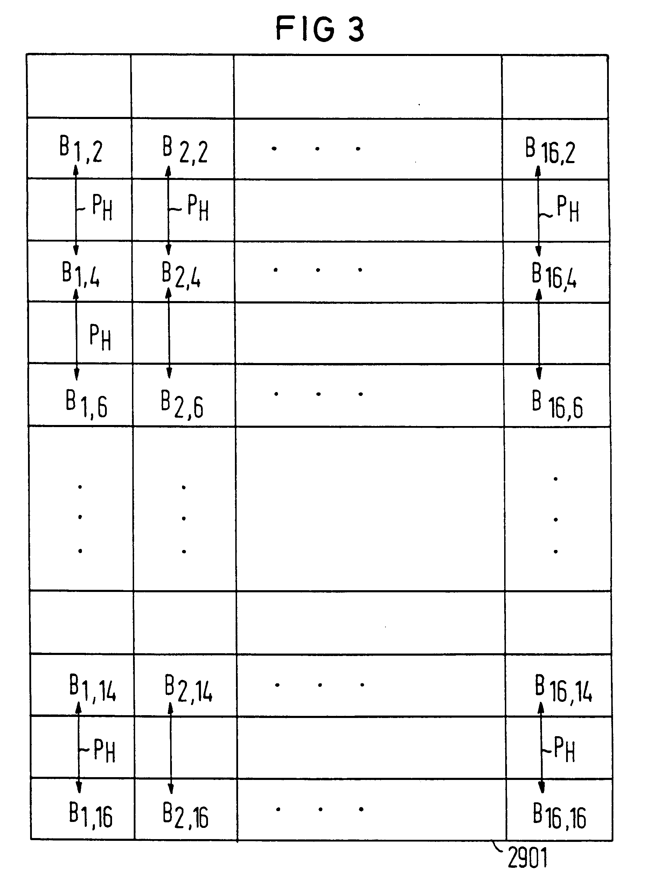

Wie die Figur 3 zeigt, werden die Bildwerte des ersten Halbbildes bei diesem Ausführungsbeispiel in die Datenstruktur 2901 eingetragen, welche ebenso wie der Bildausschnitt 1000 in 16 Zeilen und 16 Spalten eingeteilt ist. Es werden Halbbild-Bildpunktpaare $P_H$ gebildet aus jeweils zwei Bildpunkten an einer gleichen Bildpunktposition in jeweils zwei der unmittelbar aufeinanderfolgenden Bildzeilen.

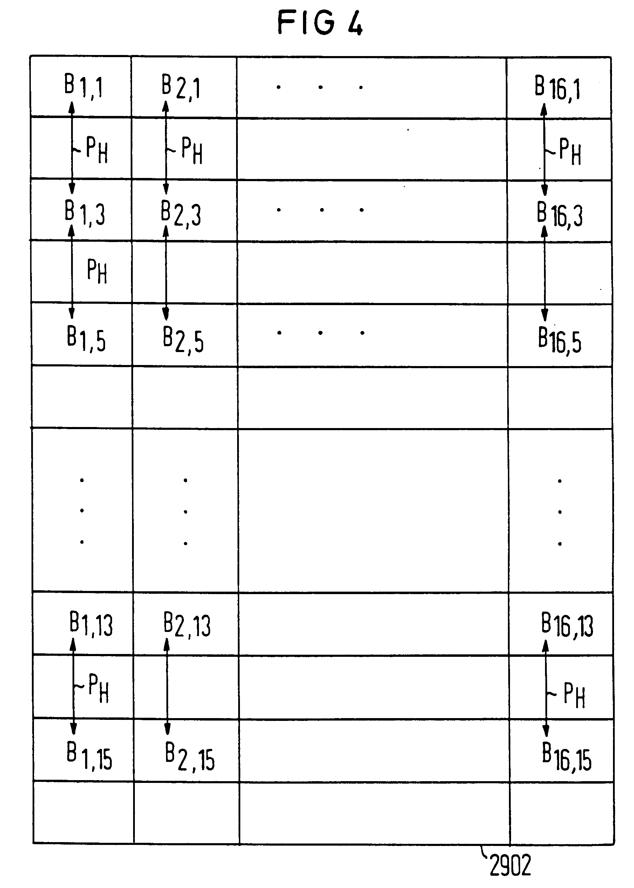

Wie die Figur 4 zeigt, werden die Bildwerte des zweiten Halbbildes bei diesem Ausführungsbeispiel in die Datenstruktur 2902 eingetragen, welche ebenso wie der Bildausschnitt 1000 in 16 Zeilen und 16 Spalten eingeteilt ist. Es werden Halbbild-Bildpunktpaare $P_H$ gebildet aus jeweils zwei Bildpunkten an einer gleichen Bildpunktposition in jeweils zwei der unmittelbar aufeinanderfolgenden Bildzeilen.

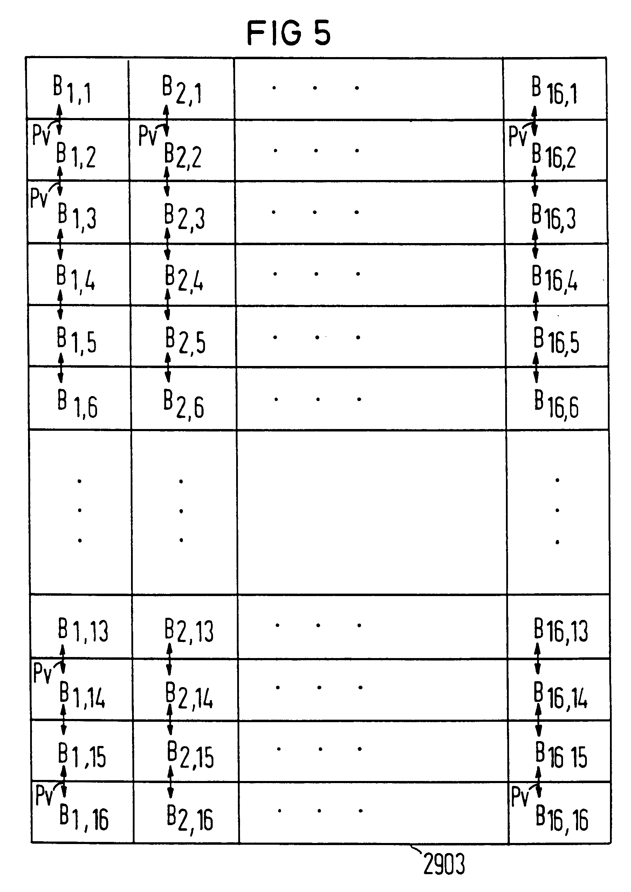

Wie die Figur 5 zeigt, werden die Bildwerte des Vollbildes bei diesem Ausführungsbeispiel in die Datenstruktur 2903 eingetragen, welche ebenso wie der Bildausschnitt 1000 in 16 Zeilen und 16 Spalten eingeteilt ist. Es werden Vollbild-Bildpunktpaare $P_V$ gebildet aus jeweils zwei Bildpunkten an einer gleichen Bildpunktposition in jeweils zwei der unmittelbar aufeinanderfolgenden Bildzeilen.

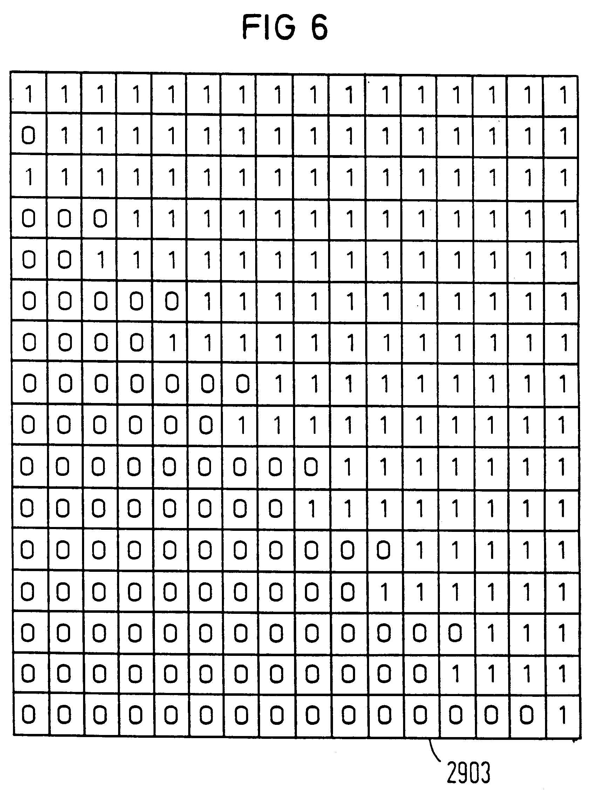

Wie die Figur 6 zeigt, werden in die Datenstruktur 2903 bei diesem Ausführungsbeispiel die Zahlenwerte 0 und 1 als die Bildwerte eingetragen.

Die Halbbildsumme HS wird bei diesem Ausführungsbeispiel wie folgt errechnet:

$$HS = \sum \left| B_{j,k} - B_{j,k+2} \right| = 26$$

$j = 1,...16$

$k = 1,...14$

Die Vollbildsumme VS wird bei diesem Ausführungsbeispiel wie folgt errechnet:

$$VS = \sum \left| B_{j,k} - B_{j,k+1} \right| = 29$$

j = 1,...16

k = 1,...14

Daraus wird das Entscheidungsergebnis E bei einer Verwendung eines Vollbild-Bewertungsfaktors von 0,9 wie folgt errechnet:

$$E = HS - 0,9 . VS = -0,1$$

Gemäß dem negativen Entscheidungsergebnis E wird das Datenkompressionsverfahren bei diesem Ausführungsbeispiel auf beide Halbbilder getrennt angewendet.

Dadurch ist bei diesem Ausführungsbeispiel erreicht, daß mittels des Unterschiedes von Halbbildsumme und Vollbildsumme die horizontale Bewegung in der Richtung des Bildzeilen erkannt wird, und daß durch den Vollbildbewertungsfaktor eine Bewertung und Berücksichtigung der erkannten Bewegung erfolgt, sodaß bei diesem Ausführungsbeispiel der Korrelation von benachbarten Punkten in den Halbbildern gegenüber der Korrelation von benachbarten Punkten im Vollbild der Vorzug gegeben wird bei der Datenkompression.

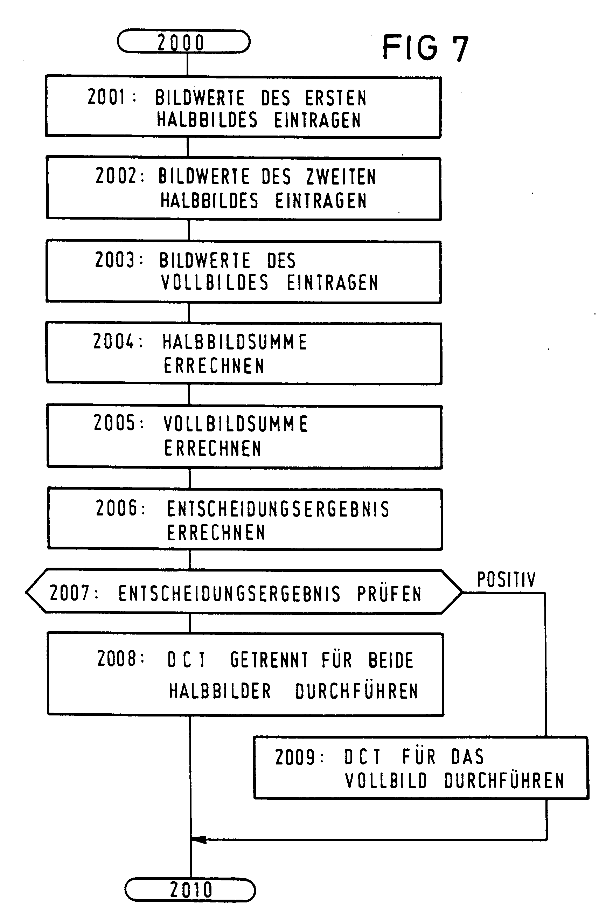

Wie die Figur 7 zeigt, wird bei diesem Ausführungsbeispiel in der Rechenanlage 4000 ein Rechenprogramm verwendet, von welchem der erfindungsgemäße Ablauf im dargestellten Flußdiagramm wiedergegeben ist.

Beginnend mit dem Programmpunkt 2000 werden zunächst mit der Instruktion 2001 die Bildwerte des ersten Halbbildes in die Datenstruktur 2901 eingetragen.

Danach werden mit der Instruktion 2002 die Bildwerte des zweiten Halbbildes in die Datenstruktur 2902 eingetragen.

Danach werden mit der Instruktion 2003 die Bildwerte des Vollbildes in die Datenstruktur 2903 eingetragen.

Danach wird mit der Instruktion 2004 die Halbbildsumme errechnet. Dabei werden von beiden Halbbildern die Halbbilddifferenzen absolut aufsummiert, welche aus den Differenzen der Bildwerte der Halbbild-Bildpunktpaare gebildet werden. Bei diesem Ausführungsbeispiel wird dabei für den Bildausschnitt 1000 für die Halbbildsumme der Zahlenwert 26 errechnet.

Danach wird mit der Instruktion 2005 die Vollbildsumme errechnet. Dabei werden vom Vollbild die Vollbilddifferenzen absolut aufsummiert, welche aus den Differenzen der Bildwerte der Vollbild-Bildpunktpaare gebildet werden. Bei diesem Ausführungsbeispiel wird dabei für den Bildausschnitt 1000 für die Vollbildsumme der Zahlenwert 29 errechnet.

Danach wird mit der Instruktion 2006 das Entscheidungsergebnis errechnet. Dabei wird die Vollbildsumme mit dem Vollbild-Bewertungsfaktor multipliziert, welcher bei diesem Ausführungsbeispiel gleich dem Zahlenwert 0,9 ist. Das dabei gebildete Vollbildprodukt wird von der Halbbildsumme subtrahiert, so daß bei diesem Ausführungsbeispiel für den Bildausschnitt 1000 das Entscheidungsergebnis mit einem Zahlenwert gleich -0,1 errechnet wird.

Danach wird mit der Instruktion 2007 das Entscheidungsergebnis geprüft und bei einem positiven Entscheidungsergebnis wird zur Instruktion 2009 verzweigt, mit welcher die Diskret-Cosinus-Transformation für das Vollbild durchgeführt wird.

Beim negativen Entscheidungsergebnis, wie bei diesem Ausführungsbeispiel für den Bildausschnitt 1000, wird mit der Instruktion 2008 die Diskret-Cosinus-Transformation getrennt für beide Halbbilder durchgeführt.

In beiden Fällen wird danach beim Programmpunkt 2010 das Rechenprogramm fortgesetzt.

**Patentansprüche**

**1.** Verfahren zu einer Ermittlung eines Entscheidungsergebnisses für ein Halbbild/Vollbild-Datenkompressionsverfahren, bei welchem von einem Bildausschnitt eines fallweise bewegten Bildes in einem Zeilensprungverfahren zeitlich aufeinanderfolgend Bildwerte von Bildpunkten in Bildzeilen von zwei zu einem Vollbild zusammensetzbaren Halbbildern aufgezeichnet werden, und bei welchem das Halbbild/Vollbild-Datenkompressionsverfahren beim positiven Entscheidungsergebnis auf das Vollbild und anderenfalls getrennt auf beide Halbbilder angewendet wird, indem die Ermittlung des Entscheidungsergebnisses auf folgende Weise durchgeführt wird:

a) von jeweils einem Halbbild-Bildpunktpaar ($P_H$) gebildet von zwei der Bildpunkte an einer gleichen Bildpunktposition in jeweils zwei der unmittelbar aufeinanderfolgenden Bildzeilen (100, 200) desselben Halbbildes wird jeweils eine Halbbilddifferenz aus einer Differenz der Bildwerte ($B_{jk}$) der Bildpunkte des Halbbild-Bildpunktpaares ($P_H$) ermittelt, und von allen den Halbbild-Bildpunktpaaren

($P_H$) beider Halbbilder werden die Halbbilddifferenzen absolut auf-summiert zu einer Halbbildsumme (HS),

b) von jeweils einem Vollbild-Bildpunktpaar ($P_R$), gebildet von zwei der Bildpunkte an der gleichen Bildpunktposition in jeweils zwei der im aus den Halbbildern zusammengesetzten Vollbild unmittelbar nebeneinanderliegenden Bildzeilen (300) aus je einem der Halbbilder, wird jeweils eine Vollbilddifferenz aus der Differenz der Bildwerte ($B_{jk}$) der Bildpunkte des Vollbild-Bildpunktpaares ($P_V$) ermittelt, und von allen den Vollbild-Bildpunktpaaren ($P_V$) werden die Vollbilddifferenzen absolut aufsummiert zu einer Vollbildsumme (VS),

c) die Vollbildsumme (VS) wird mit einem Vollbild-Bewertungsfaktor multipliziert zu einem Vollbildprodukt, und das Vollbildprodukt wird von der Halbbildsumme (HS) subtrahiert zu dem Entscheidungsergebnis (E).

2. Verfahren nach Anspruch 1, **dadurch gekennzeichnet,** daß das Datenkompressionsverfahren eine Diskret-Cosinus-Transformation ist.

3. Verfahren nach Anspruch 1 oder 2, **dadurch gekennzeichnet,** daß der Vollbild-Bewertungsfaktor einen Zahlenwert zwischen 0,8 und 1,0 aufweist.

4. Verfahren nach Anspruch 3, **dadurch gekennzeichnet,** daß der Vollbild-Bewertungsfaktor den Zahlenwert 0,9 aufweist.

5. Verfahren nach einem der vorhergehenden Ansprüche, **dadurch gekennzeichnet,** daß der Bildausschnitt ein 16x16 Bildpunktblock eines Fernsehbildes ist, welcher entweder als ein 16x16 Vollbildblock transformiert wird oder getrennt in jeweils zwei 16x8 Halbbildblöcken transformiert wird.

6. Verfahren nach einem der vorhergehenden Ansprüche, **dadurch gekennzeichnet,** daß der Bildausschnitt aufgezeichnet ist mittels eines hochauflösenden Fernsehverfahrens, eines "high definition television".

7. Verfahren nach einem der vorhergehenden Ansprüche, **dadurch gekennzeichnet,** daß der Bildausschnitt ein 8x8 Bildpunktblock eines Fernsehbildes ist, welcher entweder als ein 8x8 Vollbildblock transformiert wird oder getrennt in jeweils zwei 8x4 Halbbildblöcken transformiert wird.

**Claims**

1. Method for calculating a decision result for a field/frame data compression method, in which chronologically successive picture values of picture elements from an image section of a picture that may be occasionally moving are recorded in an interlaced scanning process in picture lines of two fields that can be combined to form one frame, and in which the field/frame data compression method is applied to the frame in the case of a positive decision result and otherwise is applied separately to the two fields, in that the decision result is calculated in the following manner:

a) from in each case one field picture element pair ($P_H$) formed by two of the picture elements at an identical picture element position in two of the immediately successive picture lines (100, 200) of the same field in each case, a frame difference is calculated in each case from a difference in the picture values ($B_{jk}$) of the picture elements of the field picture element pair ($P_H$),and the field differences of all the field picture element pairs ($P_H$) of the two fields are summed absolutely to form a field sum (HS),

b) from in each case one frame picture element pair ($P_R$) formed by two of the picture elements at the identical picture element position in two of the picture lines (300) directly adjacent in the frame composed of the fields, said lines comprising one of the fields in each case, a frame difference is calculated in each case from the difference of the picture values ($B_{jk}$) of the picture elements of the frame picture element pair ($P_V$), and the frame differences of all the frame picture element pairs ($P_V$) are summed absolutely to form a frame sum (VS),

c) the frame sum (VS) is multiplied by a frame weighting factor to form a frame product, and the frame product is subtracted from the field sum (HS) to form the decision result (E).

2. Method according to Claim 1, characterized in that the data compression method is a discrete cosine transformation.

3. Method according to Claim 1 or 2, characterized in that the frame weighting factor has a numerical value between 0.8 and 1.0.

4. Method according to Claim 3, characterized in that the frame weighting factor has the numerical value of 0.9.

5. Method according to one of the preceding claims, characterized in that the image section is a 16x16 picture element block of a television picture, which is either transformed as a 16x16 frame block or is transformed separately in two 16x8 field blocks in each case.

6. Method according to one of the preceding claims, characterized in that the image section is recorded by means of a high-definition television method.

7. Method according to one of the preceding claims, characterized in that the image section is an 8x8 picture element block of a television picture, which is either transformed as an 8x8 frame block or is transformed separately in two 8x4 field blocks in each case.

**Revendications**

1. Procédé de détermination d'un résultat de décision pour un procédé de compression de données de trame/d'image, qui consiste à enregistrer à partir d'un cadrage d'une image éventuellement mobile, par entrelacement, des valeurs successives dans le temps de points d'image, dans des lignes d'image de deux trames pouvant être composées en une image et, à utiliser le procédé de compression de données de trame/d'image, dans le cas d'un résultat de décision positif, à l'image et, sinon, séparément aux deux trames, en effecuant la détermination du résultat de décision de la manière suivante :

a) à partir de chaque couple ($P_H$) de points d'image d'une trame formé de deux points d'image en une même position de points d'image dans deux lignes (100, 200) de la même trame, qui se succèdent immédiatement, on détermine une différence de trame à partir d'une différence des valeurs ($B_{jk}$) des points d'image du couple ($P_H$) de points d'image de la trame et à partir de tous les couples ($P_H$) de points d'image de deux trames, on somme, en valeur absolue, les différences de trame en une somme (HS) de trame,

b) à partir de chaque couple ($P_R$) de points d'image d'une image, formés de deux points d'image en une même position de points d'image dans deux lignes d'image (300), qui sont côte à côte immédiatement dans l'image composée des trames et qui sont constituées chacune de l'une des trames, on détermine une différence d'image à partir de la différence des valeurs ($P_{jk}$) des points d'image du couple ($P_V$) de points de l'image, et à partir de tous les couples ($P_V$) de points de l'image on somme, en valeur absolue, les différences d'image en une somme (VS) de l'image,

c) on multiplie la somme (VS) de l'image par un facteur de pondération d'image pour obtenir un produit d'image et on soustrait le produit d'image, de la somme (HS) de la trame pour obtenir le résultat de décision (E).

2. Procédé suivant la revendication 1, caractérisé par le fait que le procédé de compression de données est une transformation en cosinus discrète.

3. Procédé suivant la revendication 1 ou 2, caractérisé par le fait que le facteur de pondération d'image a une valeur comprise entre 0,8 et 1,0.

4. Procédé suivant la revendication 3, caractérisé par le fait que le facteur de pondération d'image a la valeur 0,9.

5. Procédé suivant l'une des revendications précédentes, caractérisé par le fait que le cadrage est un bloc de 16 x 16 points d'une image de télévision, qui est transformé en un bloc d'image 16 x 16 ou qui est transformé séparément respectivement en deux blocs de trames 16 x 8.

6. Procédé suivant l'une des revendications précédentes, caractérisé en ce qu'il consiste à enregistrer au moyen d'un procédé de télévision à haute résolution d'une "high definition television".

7. Procédé suivant l'une des revendications précédentes, caractérisé par le fait que le cadrage est un bloc de 8 x 8 points d'image de télévision, qui est transformé en un bloc d'image complète 8 x 8 ou qui est transformé séparément en respectivement deux blocs de trames 8 x 4.

FIG 1

FIG 2

## FIG 3

| $B_{1,2}$ | $B_{2,2}$ | $\cdot \quad \cdot \quad \cdot$ | $B_{16,2}$ |
| --- | --- | --- | --- |
| $\uparrow \downarrow P_H$ | $\uparrow \downarrow P_H$ | | $\uparrow \downarrow P_H$ |
| $B_{1,4}$ | $B_{2,4}$ | $\cdot \quad \cdot \quad \cdot$ | $B_{16,4}$ |
| $\uparrow \downarrow P_H$ | | | $\uparrow \downarrow$ |
| $B_{1,6}$ | $B_{2,6}$ | $\cdot \quad \cdot \quad \cdot$ | $B_{16,6}$ |
| $\vdots$ | $\vdots$ | | $\vdots$ |
| | | | |
| $B_{1,14}$ | $B_{2,14}$ | $\cdot \quad \cdot \quad \cdot$ | $B_{16,14}$ |
| $\uparrow \downarrow P_H$ | $\uparrow \downarrow$ | | $\uparrow \downarrow P_H$ |
| $B_{1,16}$ | $B_{2,16}$ | $\cdot \quad \cdot \quad \cdot$ | $B_{16,16}$ |

2901

# FIG 4

| | | | |
|---|---|---|---|
| B 1,1 | B 2,1 | . . . | B 16,1 |
| $\uparrow$ $\sim P_H$ $\downarrow$ | $\uparrow$ $\sim P_H$ $\downarrow$ | | $\uparrow$ $\sim P_H$ $\downarrow$ |
| B 1,3 | B 2,3 | . . . | B 16,3 |
| $\uparrow$ $P_H$ $\downarrow$ | | | |
| B 1,5 | B 2,5 | . . . | B 16,5 |
| | | | |
| . . . | . . . | | . . . |
| B 1,13 | B 2,13 | | B 16,13 |
| $\uparrow$ $\sim P_H$ $\downarrow$ | | | $\uparrow$ $\sim P_H$ $\downarrow$ |
| B 1,15 | B 2,15 | | B 16,15 |
| | | | |

2902

# FIG 5

| $B_{1,1}$ | $B_{2,1}$ | . . . | $B_{16,1}$ |
| Pv $B_{1,2}$ | Pv $B_{2,2}$ | . . . | Pv $B_{16,2}$ |
| Pv $B_{1,3}$ | $B_{2,3}$ | . . . | $B_{16,3}$ |
| $B_{1,4}$ | $B_{2,4}$ | . . . | $B_{16,4}$ |
| $B_{1,5}$ | $B_{2,5}$ | . . . | $B_{16,5}$ |
| $B_{1,6}$ | $B_{2,6}$ | . . . | $B_{16,6}$ |
| . . . | . . . | | . . . |
| $B_{1,13}$ | $B_{2,13}$ | . . . | $B_{16,13}$ |
| Pv $B_{1,14}$ | $B_{2,14}$ | . . . | $B_{16,14}$ |
| $B_{1,15}$ | $B_{2,15}$ | . . . | $B_{16\ 15}$ |
| Pv $B_{1,16}$ | $B_{2,16}$ | . . . | Pv $B_{16,16}$ |

2903

## FIG 6

| 1 | 1 | 1 | 1 | 1 | 1 | 1 | 1 | 1 | 1 | 1 | 1 | 1 | 1 | 1 | 1 |
|---|---|---|---|---|---|---|---|---|---|---|---|---|---|---|---|
| 0 | 1 | 1 | 1 | 1 | 1 | 1 | 1 | 1 | 1 | 1 | 1 | 1 | 1 | 1 | 1 |
| 1 | 1 | 1 | 1 | 1 | 1 | 1 | 1 | 1 | 1 | 1 | 1 | 1 | 1 | 1 | 1 |
| 0 | 0 | 0 | 1 | 1 | 1 | 1 | 1 | 1 | 1 | 1 | 1 | 1 | 1 | 1 | 1 |
| 0 | 0 | 1 | 1 | 1 | 1 | 1 | 1 | 1 | 1 | 1 | 1 | 1 | 1 | 1 | 1 |
| 0 | 0 | 0 | 0 | 0 | 1 | 1 | 1 | 1 | 1 | 1 | 1 | 1 | 1 | 1 | 1 |
| 0 | 0 | 0 | 0 | 1 | 1 | 1 | 1 | 1 | 1 | 1 | 1 | 1 | 1 | 1 | 1 |
| 0 | 0 | 0 | 0 | 0 | 0 | 0 | 1 | 1 | 1 | 1 | 1 | 1 | 1 | 1 | 1 |
| 0 | 0 | 0 | 0 | 0 | 0 | 1 | 1 | 1 | 1 | 1 | 1 | 1 | 1 | 1 | 1 |
| 0 | 0 | 0 | 0 | 0 | 0 | 0 | 0 | 0 | 1 | 1 | 1 | 1 | 1 | 1 | 1 |
| 0 | 0 | 0 | 0 | 0 | 0 | 0 | 0 | 1 | 1 | 1 | 1 | 1 | 1 | 1 | 1 |
| 0 | 0 | 0 | 0 | 0 | 0 | 0 | 0 | 0 | 0 | 0 | 1 | 1 | 1 | 1 | 1 |
| 0 | 0 | 0 | 0 | 0 | 0 | 0 | 0 | 0 | 0 | 1 | 1 | 1 | 1 | 1 | 1 |
| 0 | 0 | 0 | 0 | 0 | 0 | 0 | 0 | 0 | 0 | 0 | 0 | 0 | 1 | 1 | 1 |
| 0 | 0 | 0 | 0 | 0 | 0 | 0 | 0 | 0 | 0 | 0 | 0 | 1 | 1 | 1 | 1 |
| 0 | 0 | 0 | 0 | 0 | 0 | 0 | 0 | 0 | 0 | 0 | 0 | 0 | 0 | 0 | 1 |

2903

**FIG 7**

```
( 2000 )
   │
┌──────────────────────────────────┐
│ 2001: BILDWERTE DES ERSTEN       │
│       HALBBILDES EINTRAGEN       │
└──────────────────────────────────┘
   │
┌──────────────────────────────────┐
│ 2002: BILDWERTE DES ZWEITEN      │
│       HALBBILDES EINTRAGEN       │
└──────────────────────────────────┘
   │
┌──────────────────────────────────┐
│ 2003: BILDWERTE DES              │
│       VOLLBILDES EINTRAGEN       │
└──────────────────────────────────┘
   │
┌──────────────────────────────────┐
│ 2004: HALBBILDSUMME              │
│       ERRECHNEN                  │
└──────────────────────────────────┘
   │
┌──────────────────────────────────┐
│ 2005: VOLLBILDSUMME              │
│       ERRECHNEN                  │
└──────────────────────────────────┘
   │
┌──────────────────────────────────┐
│ 2006: ENTSCHEIDUNGSERGEBNIS      │
│       ERRECHNEN                  │
└──────────────────────────────────┘
   │
< 2007: ENTSCHEIDUNGSERGEBNIS PRÜFEN >───── POSITIV
   │
┌──────────────────────────────────┐      │
│ 2008: DCT GETRENNT FÜR BEIDE     │      │
│       HALBBILDER DURCHFÜHREN     │      │
└──────────────────────────────────┘      │
   │        ┌───────────────────────────┐ │
   │        │ 2009: DCT FÜR DAS         │ │
   │        │       VOLLBILD DURCHFÜHREN │─┘
   │        └───────────────────────────┘
   │◄───────────────────────────────────────
   │
( 2010 )
```